# EUROPEAN PATENT APPLICATION

(11) **EP 4 700 100 A1**
(43) Date of publication of application: **25.02.2026**
(21) Application number: 24217450.6
(22) Date of filing: 04.12.2024
(51) Int. Cl.: C10G 2/00, B01J 23/90, B01J 23/94, B01J 23/96, B01J 38/02, B01J 38/04, B01J 38/06, B01J 38/10, C01B 3/38, C01B 3/44, C10J 3/00, C10K 1/10, C10K 3/02, C10K 3/04

(54) **METHOD AND SYSTEM FOR PREPARING SYNTHETIC OIL**

(30) Priority: 19.08.2024 KR 20240110793
(71) Applicant: SK Innovation Co., Ltd., Seoul 03188 (KR)
(72) Inventor: JUNG, Jae Heum, 34124 Daejeon (KR); KOH, Jae Hyun, 34124 Daejeon (KR); KWON, Yong Tak, 34124 Daejeon (KR); LEE, Doo Ho, 34124 Daejeon (KR); LEE, Ho Jeong, 34124 Daejeon (KR); KIM, Yong Jeon, 34124 Daejeon (KR); MOON, Ji Young, 34124 Daejeon (KR); CHA, Ye Rhee, 34124 Daejeon (KR)
(74) Representative: Prüfer & Partner mbB Patentanwälte · Rechtsanwälte

(57) **Abstract**

Proposed is a method of preparing synthetic oil, the method including producing synthetic gas by introducing the feed into a synthetic gas production reaction in the presence of a catalyst, producing synthetic oil and an FT tail gas by introducing the synthetic gas into a Fischer-Tropsch (FT) reaction, regenerating the catalyst used in the producing of the synthetic gas in a catalyst regenerator, and supplying the FT tail gas to a catalyst regenerator.

## Description

### BACKGROUND OF THE DISCLOSURE

### 1. Field of the Disclosure

The present disclosure relates to method and system for preparing synthetic oil using an Fischer-Tropsch (FT) tail gas.

### 2. Description of the Related Art

According to the dictionary, "biomass" is a portmanteau word of bio, meaning biological origin, and mass, meaning material. Accordingly, biomass refers to a material of biological origin. "Biogenic" refers to the state of originating from photosynthetic products of plants, which are primary producers. The photosynthetic products, within which solar energy is organically stored, are transferred and delivered to secondary and tertiary consumers and decomposers through the food chain. All products generated in this process may be referred to as biomass. Generally, all biological organisms constituting an ecosystem may fall into the biomass category. Even emissions (for example, feces and urine) generated by biological organisms carrying out their life cycle and the remains of plants and animals generated by the death of biological organisms originate from living things. Thus, the emissions and the remains may also fall in the biomass category.

"Municipal solid waste (MSW)" refers to solid waste generated in cities or communities. It refers to organic and inorganic materials such as food waste, paper, wood, waste plastic, waste vinyl, and waste iron. The municipal solid waste has relatively uniform properties and is discharged in a relatively constant amount. Thus, it is advantageous to use the municipal solid waste.

As techniques for converting biomass and municipal solid waste into other forms of energy, there are direct combustion and gasification. The direct combustion is a method of obtaining heat energy through incineration. However, the incineration may generate greenhouse gases such as carbon dioxide and fine dust. On the other hand, gasification is a technique to produce synthetic gas containing carbon monoxide and hydrogen.

The synthetic gas may be used to produce synthetic oil through a Fischer-Tropsch (FT) reaction. As a by-product in the Fischer-Tropsch reaction, a tail gas is produced. The tail gas may be burned to provide heat in the process or used as fuel for a gas turbine. Therefore, recently, research has been conducted to use tail gas more efficiently.

### [Related Art Document]

### [Patent Document]

(Patent Document 1) Korean Patent No. 10-1860529

### SUMMARY OF THE DISCLOSURE

In one aspect of the present disclosure a method and system may be provided for preparing synthetic oil economically and environmentally friendly through the suppression of greenhouse gas emissions. In a further aspect, the use of such a method or the use of such a system for preparing synthetic oil economically and environmentally friendly is disclosed. This is achieved by regenerating a reforming catalyst with the use of a Fischer-Tropsch tail gas as a regenerant.

The method of preparing synthetic oil according to the present disclosure may include: providing a feed including a carbon material; producing a synthetic gas by introducing the feed into a synthetic gas production reaction in the presence of a catalyst; producing synthetic oil and an FT tail gas by introducing the synthetic gas into a Fischer-Tropsch (FT) reaction; regenerating the catalyst used in the producing of the synthetic gas in a catalyst regenerator; and supplying the FT tail gas to a catalyst regenerator.

In one embodiment, the synthetic gas production reaction may include a gasification reaction.

In another embodiment, the synthetic gas production reaction may include a partial oxidation reaction, a catalytic reforming reaction, a water-gas shift reaction, or a hydrogen injection, or a combination thereof.

In a further embodiment, the producing of the synthetic gas may involve physically or chemically scrubbing products of the synthetic gas production reaction.

In a yet further embodiment, the method may further include controlling a temperature of the FT tail gas to a range of 400°C to 1,000°C before supplying the FT tail gas to the catalyst regenerator.

In a still yet further embodiment, the controlling of the temperature of the FT tail gas may include partially combusting an FT tail gas, heating the FT tail gas, or a combination thereof.

In a still yet further embodiment, the method may further include controlling a reaction temperature of the catalyst regenerator to 400°C to 1,000°C.

In a still yet further embodiment, the controlling of the reaction temperature of the catalyst regenerator may be carried out by heating the catalytic regenerator with an electric heater or an inductive heater.

In a still yet further embodiment, the controlling of the reaction temperature of the catalyst regenerator may further involve partially combusting the FT tail gas by supplying oxygen.

In a still yet further embodiment, the catalyst may include any one selected from the group consisting of a nickel-based catalyst, an iron-based catalyst, a cobalt-based catalyst, a ruthenium-based catalyst, a platinum-based catalyst, and a rhodium-based catalyst. Within the meaning of the present invention, a catalyst that is "based" on a certain substance or material such as a certain metal, e.g., a transition metal, or a noble metal, is a catalyst that contains this certain substance or material as the main active component. For example, a Ni-based catalyst is a catalyst that is based on (i.e., contains) Ni as the main active component. The main active component of a catalyst is the material or substance within the catalyst system that is responsible for the actual catalytic activity, i.e. that can accelerate the chemical reaction without itself being consumed.

In a still yet further embodiment, the producing of the synthetic gas may be carried out in two or more reactors connected in parallel to each other. When some reactors are in a regeneration mode to regenerate a catalyst, the remaining reactors may be in an operation mode to produce a synthetic gas. The catalyst in the regeneration mode in a reactor may be regenerated in the catalyst regenerator.

In a still yet further embodiment, the producing of the synthetic gas may be carried out in a circulating fluidized bed reactor. The circulating fluidized bed reactor includes both a reaction section and a catalyst regenerator in communication with the reaction section. In the circulating fluidized bed reactor, a catalyst deactivated in the reaction section is transferred to the catalyst regenerator, and then the catalyst regenerated in the catalyst regenerator is transferred to the reaction section. Therefore, the catalyst may be regenerated in-situ while circulating in a circulating fluidized bed reactor.

In a still yet further embodiment, in the regenerating of the catalyst, the catalyst regenerator produces a catalyst regenerator tail gas, and the catalyst regenerator tail gas may be introduced into the synthetic gas production reaction together with a feed.

According to another aspect of the present disclosure, a system for preparing synthetic oil according to the present disclosure is provided. This system may include: a synthetic gas production section in which a feed including a carbon material is supplied, to the effect that the synthetic gas production section comprises the supplied feed including a carbon material; and synthetic gas is produced in the synthetic gas production section through a synthetic gas production reaction in the presence of a catalyst; a Fischer-Tropsch (FT) reaction section in which the synthetic gas is introduced, to the effect that the synthetic gas is present in the FT reaction section, and synthetic oil and FT tail gas are produced by the Fischer-Tropsch (FT) reaction; and a catalyst regeneration section in which the catalyst used in the synthetic gas production section is regenerated. Here, the FT tail gas may be supplied to the catalyst regeneration section.

In a still yet further embodiment, the catalyst regeneration section may include the catalyst regenerator. The catalyst and FT tail gas may be supplied to the catalyst regenerator.

In a still yet further embodiment, the catalyst regeneration section may further include a pre-heater and a pre-combustor, or a combination thereof. The FT tail gas may be supplied to the catalytic regenerator via the pre-heater, pre-combustor, or a combination thereof.

According to another aspect of the present disclosure, a use of the method as disclosed herein, or a use of the system as disclosed herein, for preparing synthetic oil, is provided.

In the present disclosure, an improved method and an improved system for producing synthetic oil is provided, with the method and/or the system being improved for example in terms of economically and environmentally friendly.

### BRIEF DESCRIPTION OF THE DRAWINGS

FIG. 1 is a flowchart of a process for preparing synthetic oil according to one embodiment;
FIG. 2 is a flow diagram of a process for preheating an FT tail gas according to another embodiment;
FIG. 3 is a flowchart of a process for supplying reaction heat to a catalyst regenerator according to a further embodiment;
FIG. 4 is a flowchart of a process for supplying reaction heat to a catalyst regenerator according to a yet further embodiment;
FIG. 5 is a flowchart of a process for supplying reaction heat to the catalyst regenerator according to a still yet further embodiment;
FIG. 6 is a graph showing the performance of a catalyst that converts methane over reaction time according to a still yet further embodiment; and
FIG. 7 is a graph showing the performance of a regenerated catalyst according to a still yet further embodiment.

### DESCRIPTION OF THE PREFERRED EMBODIMENTS

Hereinafter, the present disclosure will be described in detail with reference to the attached drawings. However, this is merely illustrative and the present disclosure is not limited to the specific embodiments described by way of example.

### Feed

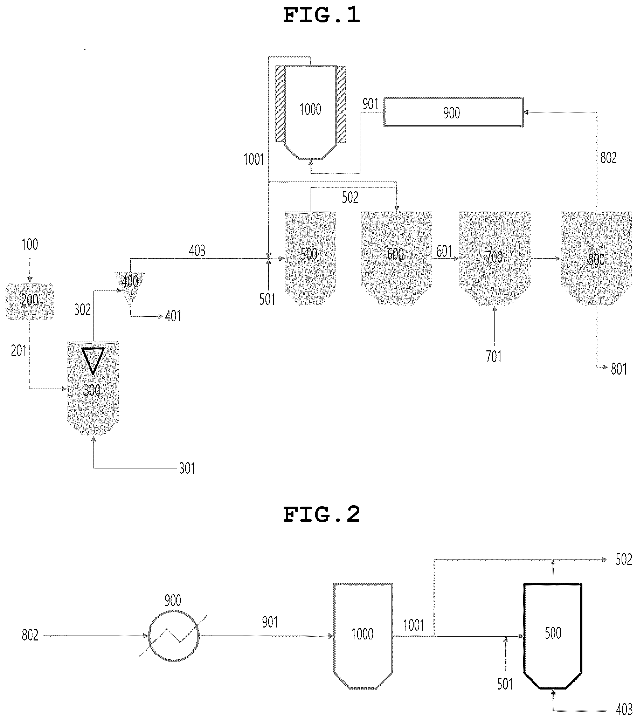

FIG. 1 is a flowchart of a process for preparing synthetic oil according to one embodiment. The method of preparing synthetic oil according to the present disclosure may include providing a feed 100 including a carbon material. The feed 100 including a carbon material may include any one selected from the group consisting of coal, biomass, and municipal solid waste, or mixtures thereof. In this present disclosure, municipal solid waste may also be abbreviated as waste.

In one embodiment, the feed 100 may be sorted depending on properties such as source, size, type, and moisture content during sorting with a sorter 200. For example, during the sorting, metal components may be removed from the feed 100. A typical sorting process can be as follows: The sorting process may begin with a size separation step, wherein the MSW is screened to separate larger items from smaller particles. This initial separation removes bulky items such as plastics, metals, and glass, thereby contributing to a more homogeneous feedstock. Next, a magnetic separation step may be employed to extract ferrous metals from the waste stream, improving the quality of the remaining material. Non-magnetic metals are subsequently removed via eddy current separation, which targets non-ferrous metals like aluminum to further reduce contaminants. Following metal removal, the waste may undergo air classification to separate lighter materials, such as paper and plastics, from denser materials, such as glass and metals, based on their density differences. This classification ensures a consistent and optimized feed for the gasification process. An optical sorting step then may use visible and infrared light to differentiate and separate various types of plastics and other materials based on their optical properties. This step enables further refinement of the feedstock composition. Finally, the sorted materials may undergo a shredding and crushing step, wherein they are processed to achieve a uniform particle size suitable for introduction into the gasification reactor. This method enhances the efficiency of gasification by providing a cleaner, more consistent feedstock while maximizing the energy recovery potential from municipal solid waste.

The method of preparing synthetic oil of the present disclosure may include producing a synthetic gas by introducing the feed 100 into a synthetic gas production reaction in the presence of a catalyst.

### Gasification reaction

In one embodiment, a synthetic gas production reaction may include a gasification reaction, which can be a preferred synthetic gas production reaction. The gasification reaction refers to a reaction in which a carbonaceous raw material 201 containing carbon (which may also be referred to as carbon-containing material) as a basic ingredient (for example, coal, biomass, and waste) in a solid or liquid state is steamed in a gasifier 300, and then, the steamed carbonaceous raw material is reacted with a gasifying agent 301 (for example, carbon dioxide and oxygen) to convert the carbonaceous raw material into a synthetic gas 302, the main components of which are carbon monoxide and hydrogen. The gasification reaction is carried out at a temperature that is suitable for converting the carbonaceous raw material into a synthetic gas, e.g., the temperature is in a range from 400°C to 1,000°C, for example, 450°C to 950°C, 500°C to 900°C, 550°C to 850°C, 600°C to 800°C, and 650°C to 780°C, e.g., 760°C.

A first synthetic gas 302 is mainly made of hydrogen and carbon monoxide, but may further include components such as carbon dioxide and methane. Additionally, in the stream of the first synthetic gas 302 leaving the gasifier 300, impurities such as tar, solid ash, and slag may be included.

Referring to FIG. 1, the gasifying agent 301 including H₂O, carbon dioxide, or oxygen, and a carbon-containing material 201 (for example, biomass and municipal solid waste) are introduced into the gasifier 300. The carbon-containing material 201 introduced into the gasifier 300 reacts with the gasifying agent 301 (for example, H₂O, carbon dioxide, and oxygen) in the presence of a catalyst to generate products including H₂, CO, CO₂, CH₄, and H₂O. At this point, the main reactions below may occur in the gasifier 300.

C + H₂O ↔ CO + H₂ (1)

C + CO₂ ↔ 2CO (2)

C + O₂ ↔ CO₂ (3)

CO + 3H₂ ↔ CH₄ + H₂O (4)

CH₄ + H₂O ↔ CO + 3H₂ (5)

CH₄ + CO₂ ↔ 2CO + 2H₂ (6)

CH₄ + 2O₂ ↔ CO₂ + 2H₂O (7)

The catalyst used in the gasification reaction may be a general catalyst applicable to the gasification reaction of the carbon-containing material 201. Preferably, a catalyst containing an alkali metal or alkaline earth metal, or a transition metal catalyst may be used. The alkali metal components used for the catalyst may include Li, Na, K, Rb, Cs, and Fr. The alkaline earth metal components used for the catalyst may include Mg and Ca. The transition metal catalyst used may include any catalyst containing the metal components selected from Fe, Ni, Co, Cu, and Zn. However, in the three cases, the metal components are not limited thereto, respectively. It will be apparent to those skilled in the art that other metal components suitable for the purposes of the present disclosure may also be used. In an embodiment, a transition metal catalyst including any catalyst containing the metal component Ni is preferred. Even more preferred is a transition metal catalyst including, as the metal component, only Ni.

In another embodiment, for maximum conversion of carbon materials, the synthetic gas 302 produced in a primary gasifier 300 may be further passed through a secondary gasifier (not shown).

In a further embodiment, the synthetic gas 302 discharged from the gasifier 300 may pass through one or more selected from the group consisting of a cyclone 400, a gas filter (not shown), a gas absorber (not shown), and a gas adsorber (not shown).

The stream of the first synthetic gas 302 discharged from the gasifier 300 may be passed through a cyclone 400 to remove undesirable solid materials 401 such as solid ash and slag. The cyclone refers to a device that uses centrifugal force to separate solid particles from a mixture containing the solid particles. The particles to be separated are those scattered from the gasifier. The particles may include a catalyst, unreacted feed, solid ash, and slag. The cyclone may be a conventional cyclone known in the art.

A gas filter (not shown) may be further installed downstream of the cyclone 400. The gas filter may filter out significantly small dust and particles in the gas. Typically, the cyclone may deal with particles of up to about 10 µm in size, and the gas filter may deal with particles of up to about 1 µm in size.

A gas absorber (not shown) or a gas adsorber (not shown) may be located upstream or downstream of the cyclone 400. The gas absorber and gas adsorber may remove H₂S, HCl, and NH₃ contained in the streams of the first and second synthetic gases 302 and 403. Additionally, the gas absorber and gas adsorber may remove metal atoms through vaporization or sublimation. Additionally, the gas absorber and gas adsorber may remove other organic and inorganic impurities.

In a still yet further embodiment, the producing of the synthetic gas may involve a partial oxidation reaction, a catalytic reforming reaction, a water-gas shift reaction, or a hydrogenation reaction, or a combination thereof.

In a still yet further embodiment, the second synthetic gas 403 discharged from the cyclone 400 may be introduced into a catalytic reformer 500. Additionally, the second synthetic gas 403 discharged from the cyclone 400 may be introduced into the catalytic reformer 500 through a partial oxidation reactor (not shown).

### Partial Oxidation: POx

In one embodiment, the synthetic gas production reaction may include a partial oxidation reaction. Referring to FIG. 1, the stream of a first synthetic gas 302 discharged from a gasifier 300 may include methane. Methane may be converted to carbon monoxide and hydrogen through a partial oxidation reaction represented by reaction equation (8) below in a partial oxidation reactor (not shown).

CH₄ + ½O₂ ↔ CO + 2H₂ △H^{o}₂₉₈ = -36 kJ/mol (8)

### Catalytic Reforming

According to the present disclosure, the synthetic gas production reaction is required to include a catalytic reforming reaction. Accordingly, in one embodiment, a synthetic gas production reaction may be carried out sequentially in a gasifier and catalytic reformer. In addition, in another embodiment, the synthetic gas production reaction may be carried out sequentially in the gasifier, a partial oxidation reactor, and a catalytic reformer.

As described above, the stream of a first synthetic gas 302 discharged from the gasifier 300 may include methane and hydrocarbons having a carbon number of 2 or more. Methane and hydrocarbons having a carbon number of 2 or more may be converted to carbon monoxide and hydrogen in a catalytic reformer 500 (which may also be referred to as a catalytic reforming reactor). Solids are removed from the stream of the synthetic gas 302 discharged from the gasifier 300 in a cyclone 400. Then, the stream of a second synthetic gas 403 from which the solids have been removed passes through the partial oxidation reactor (not shown). Thereafter, the stream may be introduced into the catalytic reformer 500 without passing through a partial oxidation reactor (not shown).

In a further embodiment, the catalytic reforming reaction may be a steam methane reforming (SMR) reaction represented by equation (9).

CH₄ + H₂O ↔ CO + 3H₂ △H^{o}₂₉₈= 206 kJ/mol (9)

Additionally, the catalytic reforming reaction, as expressed in the reaction equation (10) below, may be a steam reforming reaction that converts hydrocarbons (C²⁺) having a carbon number of 2 or more into carbon monoxide and hydrogen.

CₓH_{y} + zH₂O ↔ pCO + qH₂ (10)

Here, x, y, z, p, and q are integers of 2 or more.

In a yet further embodiment, the catalyst used in the steam reforming reaction including the steam methane reforming reaction, may include a transition metal (for example, Ni, Fe, and Co)-based catalyst or a noble metal (for example, Ru, Pt, and Rh)-based catalyst. Preferably, the catalyst used in the steam reforming reaction may include Ni, Fe, Co, and similar transition metals, and bimetallic material thereof with Al₂O₃ as carrier(Ni-Al₂O₃, NiFe-Al₂O₃, NiMgK-Al₂O₃, Rh-Al₂O₃. The catalyst may also include alkali earth metal such as Mg, Ce, and lanthanide.

In a still yet further embodiment, the catalytic reforming reaction may be a dry reforming reaction represented by the equations (11) and (12) below.

CH₄+ CO₂ ↔ 2CO + 2H₂ △H^{o}₂₉₈= 247.44 kJ/mol (11)

CₓH_{y} + zCO₂ ↔ pCO + qH₂ (12)

Here, x, y, z, p, and q are integers of 2 or more.

In a still yet further embodiment, the catalyst used in the dry reforming reaction may include a transition metal (for example, Ni, Fe, and Co)-based catalyst or a noble metal (for example, Ru, Pt, and Rh)-based catalyst.

In a yet further embodiment, the catalytic reformer 500 may be a fluidized bed reactor. The catalyst may flow within the fluidized bed reactor, thereby efficiently facilitating the steam reforming reaction of hydrocarbons (for example, methane) or the dry reforming reaction between hydrocarbons (for example, methane) and carbon dioxide. Thereby, the conversion rate from hydrocarbons such as methane to carbon monoxide and hydrogen is significantly increased. Ultimately, large amounts of carbon monoxide and hydrogen may be generated.

In a still yet further embodiment, the catalytic reformer 500 may be a fixed bed reactor. Reactants including hydrocarbons such as methane may be involved in the steam reforming reaction or dry reforming reaction while passing through a catalyst layer.

In a still yet further embodiment, the catalytic reformer 500 may be a circulating fluidized bed reactor. The circulating fluidized bed reactor may include both a reaction section and a catalyst regenerator in communication with the reaction section. The catalyst deactivated in the reaction section is transferred to the catalyst regenerator, and then the catalyst regenerated in the catalyst regenerator is transferred to the reaction section. Accordingly, the catalyst may be regenerated in-situ while circulating in the circulating fluidized bed reactor.

In this way, the reformed synthetic gas 502, which is mainly made of hydrogen and carbon monoxide, is discharged from the catalytic reformer 500. So, the synthetic gas may be used as a raw material or reactant for the downstream water-gas shift reaction or Fischer-Tropsch (FT) reaction.

### Water-gas shift reaction

In one embodiment, a synthetic gas production reaction may include a water-gas shift reaction to maintain the H₂/CO ratio of the feed at 2, the feed flowing into an FT reactor 800. Alternatively, a separate hydrogen 701 may be introduced into a water-gas shift reactor 700 to maintain the H₂/CO ratio at 2. The water-gas shift reaction may be expressed as the equation (13) below.

CO + H₂O ↔ CO₂ + H₂ △H = -41.1 kJ/mol (13)

In another embodiment, a catalyst used in the water-gas shift reaction may be a platinum-based catalyst, an iron-based catalyst, or a copper-based catalyst.

### Scrubbing

In one embodiment, the producing of a synthetic gas may include scrubbing the products of a synthetic gas production reaction. Solid impurities (for example, catalyst particles), liquid impurities (for example, tar), and gaseous impurities (for example, H₂S) included in the products of the synthetic gas production reaction may be removed by spraying a scrubber solution onto the products of the synthetic gas production reaction. A scrubber 600 may be located upstream or downstream of a partial oxidation reactor (not shown), catalytic reforming reactor 500, or water-gas shift reactor 700, respectively.

The scrubber solution may be selected depending on the type of impurities included in the products of the synthetic gas production reaction. The scrubber solution may include, but is not limited to, water, oil, or NaOCl solution. Since the solid and liquid impurities are mixed into the scrubber solution and removed, thereby the scrubbed stream 601 of the synthetic gas may be discharged from the scrubber in a gaseous state.

In another embodiment, the scrubber may include, but is not limited to, a water scrubber, venturi scrubber, or oil scrubber that removes catalyst particles, tar, and H₂S included in the products of the synthetic gas production reaction.

### Swing mode

In one embodiment, the producing of a synthetic gas may be carried out in a so-called swing mode. In other words, the producing of the synthetic gas may be carried out in two or more reactors connected in parallel to each other. When some reactors are in regeneration mode to regenerate a catalyst, the remaining reactors may be in operation mode to produce a synthetic gas. The catalyst in a reactor in regeneration mode may be regenerated in the catalyst regenerator.

For example, the operation of a catalytic reforming reactor 500 is required to be stopped to replace a catalytic reforming layer or regenerate a catalyst. However, stopping the operation of the catalytic reforming reactor 500 means stopping the entire operation in the producing of the synthetic gas. Therefore, the stopping of the operation of the catalytic reforming reactor 500 acts as a major factor in lowering the operation rate of the entire synthetic gas production process.

In another embodiment, the catalytic reforming may be performed in swing mode in two or more catalytic reforming reactors 500. That is, when one catalytic reforming reactor 500 is in the operation mode, the remaining catalytic reforming reactors 500 may be in the regeneration mode. Therefore, the catalytic reforming may be performed continuously.

### Fischer-Tropsch (FT) reaction

In one embodiment, a method of preparing synthetic oil may include introducing a synthetic gas into a Fischer-Tropsch (FT) reaction to produce synthetic oil and FT tail gas.

In another embodiment, a synthetic gas produced in a water-gas shift reaction may be introduced into a Fischer-Tropsch reaction.

The Fischer-Tropsch reaction may be expressed as the equation (14) below.

(2n+1)H₂ + nCO → CₙH₂ₙ₊₂ + nH₂O (14)

In a further embodiment, the FT reaction may be carried out at a temperature in a range of about 200°C to 350°C in the presence of a Fe, Co, or Ru catalyst.

Alkanes produced in the FT reaction are in the liquid phase and correspond to the main product, synthetic oil 801. The alkanes included in the synthetic oil 801 typically have a carbon number of 10 to 20.

Unreacted components of the synthetic gas that have not been involved in the FT reaction (for example, hydrogen (H₂)) and light hydrocarbons generated from the FT reaction (for example, carbon monoxide (CO), carbon dioxide (CO₂), and methane (CH₄)) may be discharged as an FT tail gas 802.

### <Catalyst Regeneration>

A method of preparing synthetic oil according to the present disclosure may include regenerating a catalyst used in the producing of a synthetic gas, for example, regenerating a catalyst used in a catalytic reforming reaction in a catalyst regenerator 1000.

In one embodiment, an FT tail gas 802 including H₂, CO, CO₂, and CH₄ may be supplied to the catalyst regenerator 1000 to regenerate the catalyst used in the producing of the synthetic gas.

In another embodiment, the catalyst used in the producing of the synthetic gas may be the catalyst used in a catalytic reforming reactor 500.

A carbon adsorbed on the catalyst is removed by reacting with carbon dioxide or water included in the FT tail gas according to the equations below, and as a result, the catalyst may be regenerated.

C + CO₂ → 2CO △H^{O}= 172.4 kJ/mol (15)

C + H₂O → CO + H₂ △H^{O}= 131.3 kJ/mol (16)

In addition, sulfur adsorbed on the catalyst M is removed by reacting with hydrogen included in the FT tail gas as shown in the equations below, and as a result, the catalyst M may be regenerated.

When the sulfur is chemisorbed on the catalyst M, the catalyst may be regenerated by the mechanisms below.

When the FT tail gas includes only H₂:

M-S(chemisorbed) + H₂ → M + H₂S (17)

When the FT tail gas includes both steam and H₂:

M-S + H₂O → M-O + H₂S (18)

M-O + H₂ → M + H₂O (19)

When the sulfur is adsorbed on the catalyst, the catalyst may be regenerated by the mechanisms below.

When the FT tail gas includes only H₂:

MSx + H₂ → M + H₂S (20),

and Here x is an integer of 1 or more.

When the FT tail gas includes both steam and H₂:

MSx + H₂O → MOx + H₂S (21)

MOx + H₂ → M + H₂O (22)

In a further embodiment, exhaust gases 502, such as CO and H₂, generated in the process of regenerating the catalyst by removing the carbon and sulfur adsorbed on the catalyst in the catalytic reformer 500, may be used as feeds for the downstream Fischer-Tropsch process.

When carbon dioxide and steam included in FT tail gas are discharged into the atmosphere, they may cause environmental pollution problems such as the greenhouse effect.

Meanwhile, CO₂ in the synthetic gas is removed in an amine absorption tower (not shown) upstream of an FT reactor 800, so the CO₂ included in the FT tail gas may remain in a trace amount. The water generated in the FT reaction passes through a three-phase separator (not shown) downstream of the FT reactor 800 and is separated into tail gas/water/oil, so the steam included in the FT tail gas may remain in a trace amount.

In the present disclosure, in the producing of the synthetic oil, the FT tail gas including carbon dioxide, steam, and hydrogen is used for the regenerating of a reforming catalyst. As such, the method and system for preparing synthetic oil of the present disclosure use FT tail gas generated during the process as a regenerant for the catalyst without using a separate regeneration gas. Therefore, the method and system are economical since they reduce the amount of the regenerant used and the use of utility. Furthermore, the method and system may be improved to be environmentally friendly since they alleviate greenhouse effect problems.

The catalytic reformer may include a heater to increase the temperature of the synthetic gas passing through the catalytic reforming layer and to increase the temperature of the catalytic reforming layer. The heater may be provided in contact with the catalytic reforming layer. The heater may facilitate the reforming reaction by raising the temperature of some of the synthetic gas lost during transport or by raising the temperature of the synthetic gas to the extent necessary for catalyst regeneration. The catalyst reforming layer may have a temperature maintained by the thermal energy of the heater in a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges.

To maintain the temperature of the catalyst reforming layer in a range of 400°C and 1,000°C, a high temperature heater may be operated continuously. However, since the amount of electrical energy used to generate heat in the high-temperature heater is significant, the heater may act as a factor in lowering the energy efficiency of the entire gasification system. Therefore, the tail gas discharged at a high temperature after the regenerating of the catalyst may be introduced back into the synthetic gas production facility and used as an energy source. At this point, impurities included in the tail gas may be removed upstream and/or downstream of the synthetic gas production facility.

In a yet further embodiment, before supplying the FT tail gas to the catalytic regenerator, the method further include controlling a temperature of FT tail gas to a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges. In addition, the use of a preheater 900 may be further included.

When the temperature of the tail gas is lower than 400°C, the catalyst regeneration reaction may be minimal. When the tail gas has a temperature exceeding 1000°C, the catalyst may lack thermal stability.

In the present disclosure, without a separate heating medium, the FT tail gas is used as a heating medium, so a great economic effect may be obtained.

FIG. 2 is a flow diagram of a process for preheating an FT tail gas according to a still yet further embodiment. Referring to FIG. 2, preheating the FT tail gas may be carried out by a heater or preheater 900, such as, by a gas firing heater, an electric heater, or an induction heater, but the heater type is not limited thereto. For the preheating, the heater or preheater may increase the temperature of the FT tail gas 802 to a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges.

When the reforming catalyst is regenerated in the catalyst regenerator 1000 using the preheated FT tail gas 901, the reforming catalyst may be supplied to the catalytic reformer 500 and reused as a catalyst for the reforming reaction. Through this configuration, the problem of catalyst deactivation is solved, and there is no need to continuously introduce new catalysts for the reforming reaction as in the conventional art. Therefore, this may result in significant cost savings.

Meanwhile, the regenerating of the reforming catalyst may be carried out in a swing mode together with the catalytic reforming, so that the catalytic reforming may be carried out continuously without interruption.

Referring again to FIG. 2, a catalyst regenerator tail gas 1001 discharged after regenerating the reforming catalyst in the catalyst regenerator 1000 may be introduced into the catalytic reforming reactor 500 and used as a raw material for the catalytic reforming. Therefore, the production yield of hydrogen and carbon monoxide may be increased in the catalytic reforming. In addition, the tail gas 1001 discharged from the catalytic regenerator may have a temperature in a range of 400°C to 1000°C, for example, 450°C to 950°C, 500°C to 900°C, 550°C to 850°C, 600°C to 800°C, and 650°C to 750°C, or at any temperatures within the aforementioned ranges or sub-ranges. Accordingly, the catalyst regenerator tail gas 1001 discharged from the catalyst regenerator may provide the reaction heat necessary for the catalytic reforming reactor 500. Additionally, if necessary, a first oxygen 501 may be supplied to the catalyst regenerator tail gas 1001 discharged from the catalyst regenerator 1000 to oxidize the catalyst regenerator tail gas 1001 under oxygen conditions to provide the reaction heat necessary for the catalytic reforming reactor 500. At this point, some impurities included in the tail gas may also be oxidized and recirculated to the synthetic gas production facility.

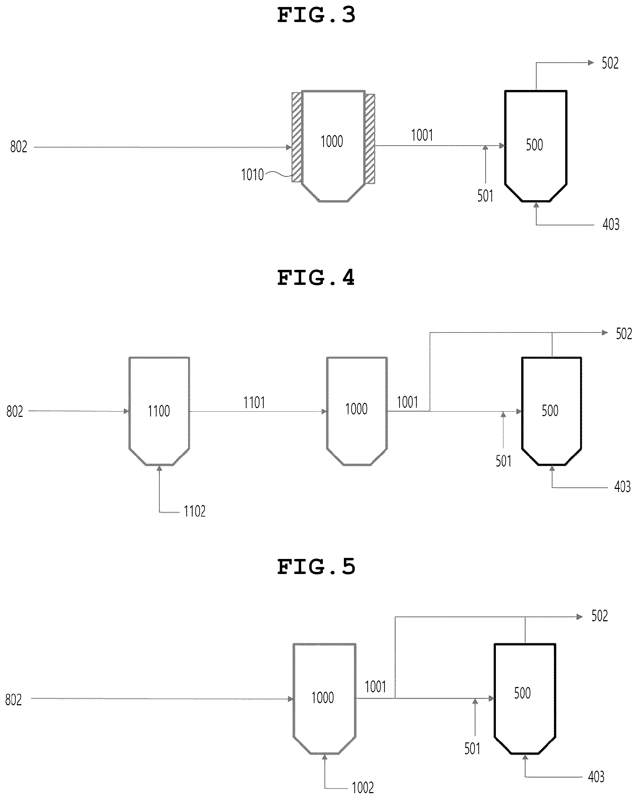

FIG. 3 is a flowchart of a process for supplying reaction heat to a catalyst regenerator according to a still yet further embodiment. Referring to FIG. 3, the recirculated FT tail gas 802 may be introduced to the catalyst regenerator 1000 without the preheating or the use of the preheater 900. The recirculated FT tail gas 802 may be heated to a temperature in the catalytic regenerator 1000 by an electric heater or an inductive heater, but the heater type is not limited thereto. The recirculated FT tail gas 802 may be heated by a heater 1010 to a temperature in a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges to be involved in the catalyst regeneration reaction.

Referring again to FIG. 3, the catalyst regenerator tail gas 1001 discharged after regenerating the reforming catalyst in the catalyst regenerator 1000 may be introduced into the catalytic reforming reactor 500. Alternatively, the catalyst regenerator tail gas 1001 may be introduced into the catalytic reforming reactor 500 after removing impurities or may be oxidized under an oxygen condition. Thereby, heat may be supplied to the downstream process. The catalyst regenerator tail gas 1001 introduced into the catalytic reforming reactor 500 may be used as a raw material and fuel in the catalytic reforming. Therefore, the production yield of hydrogen and carbon monoxide may be increased in the catalytic reforming. In addition, the catalyst regenerator tail gas 1001 discharged from the catalytic regenerator may have a temperature in a range of 400°C to 1000°C, for example, 450°C to 950°C, 500°C to 900°C, 550°C to 850°C, 600°C to 800°C, and 650°C to 750°C, or at any temperatures within the aforementioned ranges or sub-ranges. In addition, when the catalyst regenerator tail gas 1001 is oxidized by further addition of the first oxygen 501, the catalyst regenerator tail gas 1001 may have a temperature in a range of 2,000°C to 3,000°C, for example, 2,100°C to 2,900°C, 2,200°C to 2,800°C, 2,300°C to 2,700°C, and 2,400°C to 2,600°C, or at any temperatures within the aforementioned ranges or sub-ranges. Then, the oxidized catalyst regenerator tail gas 1001 is mixed with the main feed of the second synthetic gas 403. Thereafter, the catalyst regenerator tail gas 1001 may have a temperature in a range of 700°C to 1,000°C, for example, 750°C to 950°C, 800°C to 900°C, and 850°C to 900°C, or at any temperatures within the aforementioned ranges or sub-ranges. Accordingly, the catalyst regenerator tail gas 1001 discharged from the catalyst regenerator 1000 may provide the reaction heat necessary for the catalytic reforming reactor 500.

FIG. 4 is a flowchart of a process for supplying reaction heat to the catalyst regenerator 1000 according to a still yet further embodiment. Referring to FIG. 4, the recirculated FT tail gas 802 may be combined with a third oxygen 1102 below the equivalence ratio and burned in a combustor 1100. The FT tail gas 802 may be heated by partial combustion to a temperature in a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges. The heated tail gas 1101 may be introduced into the catalyst regenerator 1000 to be involved in the catalyst regeneration reaction.

Referring again to FIG. 4, the catalyst regenerator tail gas 1001 discharged after regenerating the reforming catalyst in the catalyst regenerator 1000 may be introduced into the catalytic reforming reactor 500. Alternatively, the catalyst regenerator tail gas 1001 may be introduced into the catalytic reforming reactor 500 after removing impurities or may be oxidized under the first oxygen 501 condition. Thereby, heat may be supplied to the downstream process. The catalyst regenerator tail gas 1001 introduced into the catalytic reforming reactor 500 may be used as a raw material and fuel in the catalytic reforming. Therefore, the production yield of hydrogen and carbon monoxide may be increased in the catalytic reforming. In addition, the catalyst regenerator tail gas 1001 discharged from the catalytic regenerator may have a temperature in a range of 400°C to 1000°C, for example, 450°C to 950°C, 500°C to 900°C, 550°C to 850°C, 600°C to 800°C, and 650°C to 750°C, or at any temperatures within the aforementioned ranges or sub-ranges. In addition, when the catalyst regenerator tail gas 1001 is oxidized by further addition of the first oxygen 501, the catalyst regenerator tail gas 1001 may have a temperature in a range of 2,000°C to 3,000°C, for example, 2,100°C to 2,900°C, 2,200°C to 2,800°C, 2,300°C to 2,700°C, 2,400°C to 2,600°C, and 2,500°C to 2,550°C, or at any temperatures within the aforementioned ranges or sub-ranges. Then, the oxidized catalyst regenerator tail gas 1001 is mixed with the main feed of the second synthetic gas 403. Thereafter, the mixed catalyst regenerator tail gas 1001 may have a temperature in a range of 700°C to 1,000°C, for example, 750°C to 950°C, 800°C to 900°C, and 850°C to 900°C, or at any temperatures within the aforementioned ranges or sub-ranges. Accordingly, the catalyst regenerator tail gas 1001 discharged from the catalyst regenerator 1000 may provide the reaction heat necessary for the catalytic reforming reactor 500.

FIG. 5 is a flowchart of a process for supplying reaction heat to the catalyst regenerator 1000 according to a still yet further embodiment. Referring to FIG. 5, the recirculated FT tail gas 802 may chemically react with a second oxygen 1002 below the equivalence ratio and may be burned in a catalyst Regenerator 1000. The FT tail gas 802 may be heated by the partial combustion to a temperature in a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges. The heated tail gas 1001 may be introduced into the catalyst regenerator 1000 to be involved in the catalyst regeneration reaction. In other words, the FT tail gas 802 may act as a feed, fuel, or both in the catalytic regenerator 1000.

Referring again to FIG. 5, the catalyst regenerator tail gas 1001 discharged after regenerating the reforming catalyst in the catalyst regenerator 1000 may be introduced into the catalytic reforming reactor 500. Alternatively, the catalyst regenerator tail gas 1001 may be introduced into the catalytic reforming reactor 500 after removing impurities or may be oxidized under an oxygen condition. Thereby, heat may be supplied to the downstream process. The catalyst regenerator tail gas 1001 introduced into the catalytic reforming reactor 500 may be used as a raw material and fuel in the catalytic reforming. Therefore, the production yield of hydrogen and carbon monoxide may be increased in the catalytic reforming. In addition, the catalyst regenerator tail gas 1001 discharged from the catalytic regenerator may have a temperature in a range of 400°C to 1000°C, for example, 450°C to 950°C, 500°C to 900°C, 550°C to 850°C, 600°C to 800°C, and 650°C to 750°C, or at any temperatures within the aforementioned ranges or sub-ranges. In addition, when the catalyst regenerator tail gas 1001 is oxidized by further addition of the first oxygen 501, the catalyst regenerator tail gas 1001 may have a temperature of in a range of 2,000°C to 3,000°C, for example, 2,100°C to 2,900°C, 2,200°C to 2,800°C, 2,300°C to 2,700°C, 2,400°C to 2,600°C, and 2,500°C to 2,550°C, or at any temperatures within the aforementioned ranges or sub-ranges. Then, the oxidized catalyst regenerator tail gas 1001 is mixed with the main feed of the second synthetic gas 403. Thereafter, the mixed catalyst regenerator tail gas 1001 may have a temperature in a range of 700°C to 1,000°C, for example, 750°C to 950°C, 800°C to 900°C, and 850°C to 900°C, or at any temperatures within the aforementioned ranges or sub-ranges. Accordingly, the tail gas discharged from the catalyst regenerator may provide the reaction heat necessary for the catalytic reforming reactor.

A system for producing synthetic oil of the present disclosure may include a synthetic gas production section where a feed including a carbon material is supplied, and a synthetic gas is produced through a synthetic gas production reaction in the presence of a catalyst.

In a still yet further embodiment, the synthetic gas production reaction may include the use of a sorter. The feed is introduced into the sorter, and the sorter may sort the feed depending on the components of the feed. For example, the sorter may separate and remove metal materials from the feed.

In a still yet further embodiment, the synthetic gas production section may include a gasifier 300, a cyclone 400, a partial oxidation reactor (not shown), a catalytic reforming reactor 500, a water-gas shift reactor 700, a scrubber 600, or a combination thereof.

In a still yet further embodiment, a gas filter (not shown) and a gas impurity removal device (not shown) may be installed behind the cyclone 400.

The feed 201 discharged from the sorter 200 may be introduced into the gasifier 300 to produce a synthetic gas through the gasification reaction described above. The first synthetic gas 302 discharged from the gasifier may be introduced into the cyclone 400 to remove undesirable solid materials 401 such as solid ash and slag.

In a still yet further embodiment, the first synthetic gas 302 discharged from the gasifier 300 or the second synthetic gas 403 discharged from the cyclone 400 may be introduced into the partial oxidation reactor (not shown) or the catalytic reforming reactor 500. Hydrocarbons such as methane included in the synthetic gases may be converted to carbon monoxide and hydrogen by the partial oxidation reaction described above in the partial oxidation reactor. The hydrocarbons such as methane included in the synthetic gases may be converted into carbon monoxide and hydrogen in the catalytic reforming reactor 500 by the steam reforming reaction of methane or dry reforming reaction described above.

In a still yet further embodiment, the synthetic gas discharged from the partial oxidation reactor or catalytic reforming reactor 500 may be introduced into the water-gas shift reactor 700. Carbon monoxide included in the synthetic gas may be converted into carbon monoxide and hydrogen by the water-gas shift reaction described above in the water-gas shift reactor 700. In a still yet further embodiment, a hydrogen input line 701 may be installed in the water-gas shift reactor 700.

In a still yet further embodiment, a scrubber 600 may be installed upstream or downstream of the partial oxidation reactor (not shown), catalytic reforming reactor 500, or water-gas shift reactor 700, respectively. The scrubber 600 may remove impurities using a scrubber solution such as water, oil, or NaOCl solution, depending on the type of impurities in the product of the synthetic gas production reaction.

The reactors in the synthetic gas production section may be operated in the swing mode as described above.

The synthetic gas produced in the synthetic gas production section is introduced into the Fischer-Tropsch reaction section, and the synthetic oil 801 and FT tail gas 802 may be produced through the Fischer-Tropsch (FT) reaction. The FT tail gas may be supplied to the catalyst regeneration section and used to regenerate the spent catalyst in the synthetic gas production section.

In a still yet further embodiment, the catalyst regeneration section may include a catalyst regenerator 1000, and the catalyst and FT tail gas used in the synthetic gas production section may be supplied to the catalyst regenerator 1000.

In a still yet further embodiment, the catalyst regeneration section may further include a preheater 900, a precombustor 1100, or a combination thereof. The tail gas may be heated in the preheater 900 to a temperature in a range of 400°C to 1000°C, for example, 450°C to 950°C, 500°C to 900°C, 550°C to 850°C, 600°C to 800°C, and 650°C to 750°C, or at any temperatures within the aforementioned ranges or sub-ranges. Thereafter, the FT tail gas may be supplied to the catalyst regenerator 1000. The preheater 900 may include, but is not limited to, a gas-fired heater, an electric heater, or an induction heater.

In a still yet further embodiment, the FT tail gas 802 may be introduced into the precombustor 1100. A third oxygen 1102 or air 1102 may be introduced into the precombustor 1100 for combustion. After being combusted in the precombustor 1100, the FT tail gas 802 may be heated to a temperature in a range of 400°C to 1,000°C, for example, 450°C to 950°C, 500°C to 900°C, 550°C to 850°C, 600°C to 800°C, and 650°C to 750°C, or at any temperatures within the aforementioned ranges or sub-ranges. The heated FT tail gas 1101 may be supplied into the catalyst regenerator 1000.

In a still yet further embodiment, the oxygen 1002 may be supplied to catalytic regenerator 1000, and the FT tail gas 802 may be combusted in catalytic regenerator 1000.

In a still yet further embodiment, the catalytic regenerator 1000 may include a heater 1010, for example, an electric heater or an induction heater, but is not limited thereto.

Hereinafter, examples of the present disclosure will be further described with reference to specific experimental examples. The examples and comparative examples included in the experimental examples only illustrate the present disclosure and do not limit the scope of the appended patent claims. It is obvious to those skilled in the art that various changes and modifications to the embodiments are possible within the scope of the present disclosure. It is natural that such variations and modifications fall within the scope of the attached patent claims.

### Example 1

A method of preparing synthetic oil, the method including the process flow as shown in FIG. 1, was performed at a lab scale. A feed stream including food waste as biomass was subjected to a gasification reaction in a gasifier to produce a synthetic gas. The gasification reaction was carried out at a temperature of 760 °C and a pressure of 3.2 bara (absolute pressure). The produced synthetic gas was introduced into a cyclone to remove ash and dust. The temperature and pressure inside the cyclone was 750 °C and 3.0 bara, respectively. The synthetic gas discharged from the cyclone was steam-reformed in a catalytic reformer provided with a nickel-based catalyst until the nickel-based catalyst was deactivated. The steam reforming reaction was carried out at a temperature of 700-800 °C and a pressure of 2-3 bara. When CH₄ included in the synthetic gas reached a state where it could no longer be converted to CO or H₂ through a catalytic reaction, it was considered as a deactivation point. To remove solid and liquid impurities, the synthetic gas discharged from the catalytic reformer was introduced into a scrubber, which used water as a scrubber solution. The temperature and pressure inside the scrubber was 43 °C and 2.5 bara, respectively. The synthetic gas discharged from the scrubber was introduced into a Fischer-Tropsch reactor to produce synthetic oil and tail gas. The temperature and pressure inside the Fischer-Tropsch reactor was 200 °C and 23 bara, respectively. Using the produced FT tail gas as a regenerant, the deactivated nickel-based catalyst was regenerated in a catalyst regenerator to prepare a regenerated catalyst.

The composition and concentration of the FT tail gas were measured by gas chromatography.

**[Table 1]**

| Component | Content (volume%) |
|---|---|
| CH₄ | 9 - 15 |
| CO | 10 - 15 |
| H₂ | 11 - 30 |
| CO₂ | 3 - 30 |
| H₂O | - 1 |
| C²⁺ | 2 - 3 |
| N₂ | 0 - 30 |
| Ar | 0 - 30 |
| Total | 100 |

Alternatively, composition information of the FT tail gas was obtained from an existing FT reactor. By regenerating the deactivated nickel-based catalyst with the use of a simulation gas of the same or similar composition, a regenerated catalyst may also be prepared.

### Comparative Example 1

A fresh nickel-based catalyst not exposed to impurities was prepared.

### Comparative Example 2

A regenerated catalyst was prepared by regenerating the nickel-based spent catalyst exposed to impurities with the use of a general regeneration gas (including H₂O and H₂).

### Comparative Example 3

A spent catalyst exposed to impurities and not regenerated was prepared.

Experimental example: Confirmation of recovery of activity of catalyst regenerated with use of FT tail gas

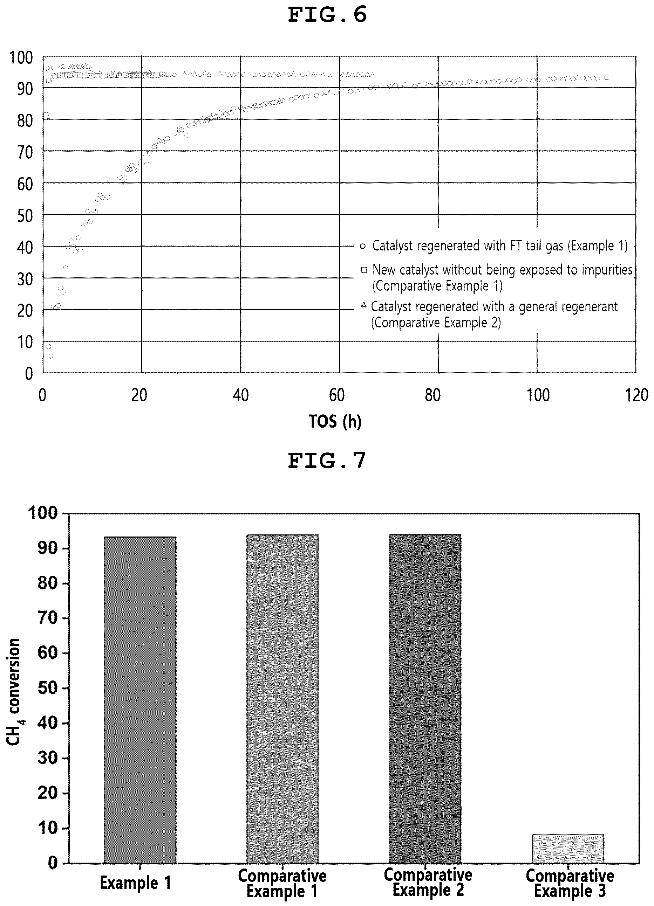

FIG. 6 shows the performance of the catalyst for converting methane included in the FT tail gas over the reaction time (time on stream: TOS). In other words, it is about measuring the ability of the catalyst to convert methane included in the FT tail gas. In the FT tail gas, 10 vol% CH₄, 30 vol% CO₂, 30 vol% H₂, 15 vol% CO, and 15 vol% N₂ were present. This reaction is where CO₂ and CH₄ react to produce H₂ and CO. In FIG. 6, the y-axis represents the conversion rate (%) of CH₄ under each catalyst.

Referring to FIG. 6, the regenerated catalyst O of Example 1, which was prepared by regenerating a deactivated catalyst through the reaction of FT tail gas, had low performance at the beginning of the reaction time. However, the performance of the catalyst was found to recover as the reaction time passed, reaching the level of the new catalyst □ in Comparative Example 1. In addition, the regenerated catalyst O of Example 1 was found to have equivalent performance to the catalyst △ of Comparative Example 2 regenerated with the use of a general regeneration gas.

This showed that the CH₄ conversion rate in the FT tail gas was continuously improving as the H₂ in the FT tail gas acted to reactivate the catalyst.

In general, in the case of spent catalysts, it was impossible to convert CH₄ in the FT tail gas without a separate regeneration process. However, it was confirmed that it was possible to convert CH₄ in the FT tail gas by regenerating the catalyst using the FT tail gas.

The methane conversion performance of the catalysts of Example 1 and Comparative Examples 1 to 3 is shown in FIG. 7. In FIG. 7, the y-axis represents the conversion rate (%) of CH₄ under each catalyst.

Referring to FIG. 7, the catalyst regenerated according to Example 1 converted methane with performance comparable to those of the new catalyst (Comparative Example 1) and the catalyst regenerated with the use of separate general regeneration gas (Comparative Example 2). In other words, the catalyst of Example 1 had a similar performance to the catalysts of Comparative Examples 1 and 2. The catalyst of Example 1 had better performance than the spent catalyst of Comparative Example 3.

The contents described above are merely examples of applying the principles of the present disclosure. Other configurations may be further included without departing from the scope of the present disclosure.

## Claims

1. A method of preparing synthetic oil (801), the method comprising:
providing a feed (100) including a carbon material;
producing a synthetic gas (302) by introducing the feed (100) into a synthetic gas (302) production reaction in the presence of a catalyst;
producing synthetic oil (801) and an FT tail gas (802) by introducing the synthetic gas (302) into a Fischer-Tropsch (FT) reaction;
regenerating the catalyst used in the producing of the synthetic gas (302) in a catalyst regenerator (1000); and
supplying the FT tail gas (802) to the catalyst regenerator (1000).

2. The method of claim 1, wherein the synthetic gas production reaction comprises a gasification reaction;
or
wherein the synthetic gas production reaction comprises a partial oxidation reaction, a catalytic reforming reaction, a water-gas shift reaction or a hydrogen injection, or a combination thereof.

3. The method of claim 1, wherein the producing of the synthetic gas (302) comprises physically or chemically scrubbing products of the synthetic gas production reaction.

4. The method of any one of claims 1 to 3, further comprising:
controlling a temperature of the FT tail gas (802) to a range of 400°C to 1,000°C before supplying the FT tail gas (802) to the catalyst regenerator.

5. The method of claim 4, wherein the controlling of the temperature of the FT tail gas (802) comprises partially combusting an FT tail gas (802), heating the FT tail gas (802), or a combination thereof.

6. The method of any one of claims 1 to 5, further comprising:
controlling a reaction temperature of the catalyst regenerator (1000) to a range of 400°C to 1,000°C;
preferably, the controlling of the reaction temperature of the catalyst regenerator (1000) is carried out by heating the catalyst regenerator (1000) with an electric heater or an inductive heater.

7. The method of claim 5 or 6, wherein the controlling of the reaction temperature of the catalyst regenerator (1000) further comprises partially combusting the FT tail gas (802) by supplying oxygen.

8. The method of any one of claims 1 to 7, wherein the catalyst comprises any one selected from the group consisting of a nickel-based catalyst, an iron-based catalyst, a cobalt-based catalyst, a ruthenium-based catalyst, a platinum-based catalyst, and a rhodium-based catalyst.

9. The method of any one of claims 1 to 8, wherein the producing of the synthetic gas (302) is carried out in two or more reactors connected in parallel to each other,
wherein when some reactors are in a regeneration mode to regenerate the catalyst, the remaining reactors are in an operation mode to produce the synthetic gas (302), and
the catalyst in the regeneration mode in a reactor is regenerated in the catalyst regenerator (1000).

10. The method of any one of claims 1 to 8, wherein the producing of the synthetic gas (302) is carried out in a circulating fluidized bed reactor,
wherein the circulating fluidized bed reactor comprises both a reaction section and the catalyst regenerator (1000) in communication with the reaction section,
wherein, in the circulating fluidized bed reactor, the catalyst deactivated in the reaction section is transferred to the catalyst regenerator, and
the catalyst regenerated in the catalyst regenerator (1000) is transferred to the reaction section,
thereby, the catalyst is regenerated in-situ while circulating in the circulating fluidized bed reactor.

11. The method of any one of claims 1 to 10, wherein, in the regenerating of the catalyst, the catalyst regenerator (1000) produces a catalyst regenerator tail gas,
wherein the catalyst regenerator tail gas (1001) is introduced into the synthetic gas production reaction together with a feed (100).

12. A system for preparing synthetic oil (801), the system comprising:
a synthetic gas production section wherein a feed (100) comprising a carbon material is supplied, and a synthetic gas (302) is produced through a synthetic gas production reaction in the presence of a catalyst;
a Fischer-Tropsch (FT) reaction section wherein the synthetic gas (302) is introduced, and synthetic oil (801) and an FT tail gas (802) are produced by the Fischer-Tropsch (FT) reaction; and
a catalyst regeneration section wherein the catalyst used in the synthetic gas production section is regenerated,
wherein the FT tail gas (802) is supplied to the catalyst regeneration section.

13. The system of claim 12, wherein the catalyst regeneration section comprises a catalyst regenerator (1000), and
the catalyst and the FT tail gas (802) are supplied to the catalyst regenerator (1000).

14. The system of claim 13, wherein the catalyst regeneration section further comprises a pre-heater (900), a pre-combustor (1100), or a combination thereof, and
the FT tail gas (802) is supplied to the catalyst regenerator (1000) via the pre-heater (900), the pre-combustor, or a combination thereof.

15. Use of a method as defined in any one of claims 1 to 11, or of a system as defined in any one of claims 12 to 14, for preparing synthetic oil (801).
